# EUROPEAN PATENT APPLICATION

(11) **EP 4 488 521 A1**
(43) Date of publication of application: **08.01.2025**
(21) Application number: 24186180.6
(22) Date of filing: 03.07.2024
(51) Int. Cl.: F04B 53/08, F04B 49/06, F15B 21/0423, F15B 21/0427, F04B 23/02

(54) **PUMP SYSTEM**

(30) Priority: 03.07.2023 GB 202310128
(71) Applicant: J.C. Bamford Excavators Limited, Uttoxeter Staffordshire ST14 5JP (GB)
(72) Inventor: Harper, Lee, Uttoxeter, ST14 5JP (GB); Corner, Daniel, Uttoxeter, ST14 5JP (GB)
(74) Representative: Hambley, Christopher John

(57) **Abstract**

A hydraulic system is provided. The hydraulic system comprises a load-bearing hydraulic circuit comprising one or more hydraulic actuators, and a hydraulic pump system. The hydraulic pump system comprises: a housing defining a tank for containing hydraulic fluid in use; a pump for supplying hydraulic fluid from the tank to the one or more hydraulic actuators of the load-bearing hydraulic circuit; an electric motor for driving the pump; and a cooling jacket surrounding the electric motor, wherein the hydraulic pump system is configured such that the hydraulic fluid flows through the cooling jacket in order to transfer heat generated by the electric motor to the hydraulic fluid.

## Description

### FIELD

The present invention relates to a pump system, to a hydraulic system including a pump system, and to a working vehicle.

### BACKGROUND

There has recently been a trend towards electrification of working vehicles, in order to reduce emissions associated with internal combustion engines. This may involve providing one or more electric components (e.g. electric motors, inverters, etc.) to drive components which would traditionally have been driven by an internal combustion engine (e.g. pumps for hydraulic systems).

It is known that most electrical components have an optimal temperature range in which their efficiency is maximised and/or degradation of internal sub-components is minimised. It is desirable to keep electrical components of electric working vehicles within such optimal temperature ranges in order to increase run-times and reduce component failures/associated maintenance costs.

The present invention seeks to overcome, or at least mitigate, one or more problems of the prior art.

### SUMMARY

A first aspect of the teachings provides a pump system comprising: a housing defining a tank for containing fluid in use; and a pump for supplying fluid from the tank to a fluid system.

In exemplary embodiments, the pump system is a hydraulic pump system, the tank is for containing hydraulic fluid in use, and the pump is a hydraulic pump for supplying hydraulic fluid from the tank to a hydraulic system.

Optionally, the pump system comprises an electric motor for driving the pump.

Optionally, the output of fluid (e.g. hydraulic fluid) from the pump is controlled via rotation speed of the electric motor.

Optionally, the pump system further comprises one or more thermally conducting cooling elements which extend from a first end proximal to a body of the electric motor to a second end within the tank.

Having one or more thermally conducting cooling elements which extend from a first end proximal to a body of the electric motor to a second end within the tank, allows heat to be transferred efficiently from the body of the electric motor to fluid (e.g. hydraulic fluid) contained within the tank. Therefore, such an arrangement may increase the rate of heat rejection compared to arrangements where a motor is cooled solely via an ambient or forced flow of air. In this way, the temperature of the active components of the electric motor can be lowered, which inhibits degradation via rotor demagnetization and can improve motor efficiency. Further this improved heat rejection facilitates improved thermal performance of the electric motor, which may allow a smaller (and lower cost) electric motor to be used to perform the same work.

In addition, such an arrangement may increase the temperature of fluid (e.g. hydraulic fluid) contained within the tank, which may facilitate improved efficiency of the fluid system by reducing pumping losses due to lower viscosity of the fluid at higher temperatures. This is particularly beneficial when the pump system is used in a hydraulic system of a working vehicle because the hydraulic fluid can be heated to optimal temperature more quickly at start-up of the working vehicle.

Optionally, the or each thermally conducting cooling element comprises a rod formed of thermally conducting material, optionally of metallic material.

Such a rod provides a simple means of transferring heat.

Optionally, the or each thermally conducting cooling element comprises a heat pipe.

Use of a heat pipe may further enhance the rate of heat rejection from the electric motor to the fluid (e.g. hydraulic fluid) contained within the tank.

Optionally, the or each thermally conducting cooling element comprises a fin formed of thermally conducting material, optionally metallic material.

Such a fin provides a simple means of transferring heat. In this context, it will be understood that the term "fin" means a projection with a comparatively thin thickness in comparison to its width and length. For example, a "plate-like" projection, such as a flat or curved plate.

Optionally, the electric motor is mounted on the housing.

Mounting the electric motor to the housing minimises the distance between the body of the electric motor and the fluid (e.g. hydraulic fluid) within the tank, which minimises the required length of the or each thermally conducting cooling element. This may further enhance the rate of heat rejection.

Optionally, the electric motor is positioned external to the tank. Alternatively, the electric motor may be positioned inside the tank.

Optionally, the one or more thermally conducting cooling elements extend from the body of the electric motor, through the housing, and into the tank.

In this way, the or each thermally conducting cooling element provides a direct link between the body of the electric motor and the fluid (e.g. hydraulic fluid) within the tank, which may increase the rate of heat rejection.

Optionally, the body of the electric motor is mounted to the housing via a thermally conducting mounting arrangement. Optionally, the one or more thermally conducting cooling elements extend from the thermally conducting mounting arrangement, through the housing, and into the tank.

Optionally, the housing comprises a mounting region formed of thermally conducting material (e.g. metallic material), wherein the body of the electric motor is mounted to an outer side of the mounting region, and wherein the first end of the or each thermally conducting cooling element is coupled to an inner side of the mounting region.

In this way, the mounting region acts as a thermally-conducting bridge between the body of the electric motor and the one or more thermally conducting cooling elements. In other words, the one or more thermally conducting cooling elements do not extend through the housing, which allows a sealed housing to be provided more easily.

Optionally, the pump system comprises a plurality of thermally conducting cooling elements.

Having a plurality of thermally conducting cooling elements may increase the rate of heat rejection compared to arrangements with a single element. In addition, having a plurality of thermally conducting cooling elements allows heat to be rejected from different portions of the body of the electric motor.

Optionally, the electric motor comprises a rotating shaft which defines an axis, wherein the pump comprises a body which extends at least partially into the tank in a direction defined by said axis, wherein each thermally conducting cooling element extends parallel to said axis, and wherein the plurality of thermally conducting cooling elements are arranged radially outside of the body of the pump with respect to said axis.

In this way, the thermally conducting cooling elements do not obstruct the pump from being connected to a shaft of the electric motor in order to drive the pump.

In addition, it will be understood that the thermally conducting cooling elements may cause local increases in temperature within the tank (i.e. "hotspots") which are radially outside of the body of the pump. It will also be understood that the pump will draw fluid from the tank which will cause movement and mixing of fluid in the vicinity of the pump. This helps to inhibit formation of such "hotspots" by removing the heated fluid and/or mixing the heated fluid with cooler fluid from elsewhere in the tank. Consequently, a greater temperature gradient between the thermally conducting cooling elements and the surrounding fluid may be provided, which may enhance heat rejection.

Optionally, the pump comprises a body which extends at least partially into the tank, wherein the plurality of thermally conducting cooling elements are arranged in a ring surrounding the body of the pump.

In this way, the thermally conducting cooling elements are arranged to remove heat approximately evenly around a circumference of the electric motor, which may enhance heat rejection.

Optionally, the pump comprises a body which extends at least partially into the tank.

This provides a compact arrangement, which may also increase pump system efficiency by reducing pumping losses between the fluid in the tank and an inlet of the pump.

Although heat may be transferred through the body of the pump in such embodiments, it will be understood that the phrase "one or more thermally conducting cooling elements" may refer to additional components separate to the body of the pump. For example, the one or more thermally conducting cooling elements may be components which have no structural, pumping or electrical functions.

Optionally, the body of the pump comprises an inlet portion which defines a pump inlet, and wherein the inlet portion of the body extends into the tank such that the pump inlet is immersed in fluid (e.g. hydraulic fluid) contained in the tank in use; and/or wherein the pump system further comprises a filter or strainer arrangement coupled to the pump inlet, wherein the inlet portion of the body extends into the tank such that the filter or strainer arrangement is immersed in fluid (e.g. hydraulic fluid) contained in the tank in use.

Optionally, the pump comprises a pump outlet, wherein the pump system further comprises a fluid supply line connected to the pump outlet for channelling fluid (e.g. hydraulic fluid) supplied by the pump out of the housing.

Optionally, the fluid supply line is coupled to a mounting arrangement for the electric motor, so that said fluid supply line can be attached/detached from the pump system with the electric motor and mounting arrangement.

Optionally, the mounting arrangement comprises a fluid supply port coupled to the fluid supply line for connection to a fluid system (e.g. hydraulic system) in order to supply fluid (e.g. hydraulic fluid) from the pump to the fluid system. Optionally, the fluid supply port is arranged to be external to the tank.

Optionally, the housing is connected with the pump and/or electric motor so as to form a single unit.

In this way a compact pump assembly is provided which can easily be installed/removed from a working vehicle or other machinery as a single unit.

Optionally, the housing comprises one or more anti-vibration mounts for coupling the single unit to a working vehicle; optionally, wherein the one or more anti-vibration mounts are provided on a different (e.g. opposite) side of the housing to the electric motor.

It will be understood that when the housing is connected with the pump and/or electric motor so as to form a single unit, vibrations caused by the pump and/or electric motor will be transferred to the housing. Therefore, the housing comprising one or more anti-vibration mounts inhibits vibrations of the housing being transferred to the working vehicle or other machinery on which the single unit is mounted.

Similarly, the anti-vibration mounts inhibit (e.g. dampen) transfer of vibrations or shocks from the working vehicle or other machinery to the pump system. For example, when travelling over rough ground, the anti-vibration mounts inhibit vibrations which are not fully dampened by the vehicle suspension system being transferred to the pump system. This reduces the risks of damage to the pump system from external shocks or vibrations.

It will be understood that the side of the housing which is mounted to a working vehicle or other machinery will not be accessible once mounted. Therefore, the electric motor being provided on a different (e.g. opposite) side of the housing allows the electric motor to be accessed more easily (e.g. for maintenance purposes) once the housing is mounted to a working vehicle or other machinery.

Optionally, the housing comprises a plurality of anti-vibration mounts provided on at least two sides of the housing. This facilitates a secure coupling between the housing and a working vehicle or other machinery.

Optionally, the housing comprises at least three anti-vibration mounts. This facilitates a secure coupling between the housing and a working vehicle or other machinery.

Optionally, the pump system comprises an inverter for controlling rotating speed of the electric motor.

Such an inverter enables variable speed control of the electric motor and DC to AC power smoothing/conversion. This is useful in applications where the electric motor is powered by a DC electricity source (e.g. a battery on an electric working vehicle or a fuel cell on a fuel cell powered working vehicle).

It will be understood that the inverter may control rotating speed by controlling frequency of power supplied to the electric motor.

Optionally, the pump system comprises a fan configured to cool the electric motor and/or inverter.

Such a fan may enhance heat rejection from the electric motor and/or inverter.

Optionally, the pump system comprises a motor cover for covering the electric motor.

Such a motor cover provides multiple functions. Firstly, the motor cover protects the electric motor from being damaged by impact or dirt/debris. Secondly, the motor cover increases safety by covering high power electrical components/circuits/connections. Thirdly, the motor cover reduces the transmission of noise generated by the electric motor, which results in a quieter pump system.

Optionally, the pump system comprises a fan configured to cool the electric motor, wherein the motor cover comprises an inlet and an outlet, wherein the electric motor is arranged between the inlet and the outlet, and wherein the fan is configured to blow air through the motor cover from the inlet to the outlet; optionally, wherein the fan is mounted to the inlet of the motor cover.

Such a fan enhances heat rejection by forcing a flow of air through the cover (i.e. into the cover via the inlet, past the electric motor and out of the cover via the outlet).

Mounting the fan to the inlet of the motor cover provides a compact arrangement and may increase flow of air through the motor cover.

Optionally, the inverter is arranged under the motor cover, or wherein the inverter is arranged under a separate inverter cover.

Mounting the inverter under the motor cover or a separate inverter cover protects the inverter from being damaged by impact or dirt/debris and improves safety by covering high power inverter circuitry/connections.

Optionally, the motor cover is made of plastics material.

Optionally, the inverter cover is made of plastics material.

Optionally, the pump system comprises an inverter for controlling frequency of power supplied to the electric motor, wherein the inverter is mounted to a thermally conducting plate above the electric motor, and comprising a fan configured to blow air underneath the thermally conducting plate in order to simultaneously cool the electric motor and the inverter.

Such a configuration provides a laterally compact arrangement (compared to locating the inverter and electric motor side-by-side) which is useful for packaging purposes. Furthermore, having the thermally conducting plate ensures that air flowing under the inverter (i.e. past the electric motor) can simultaneously cool both components. This removes the need for a separate cooling fan for the inverter.

Such a thermally conducting plate provides an increased thermal mass and surface area in comparison to individual inverter heat sinks, which may increase rejection of heat.

Optionally, the thermally conducting plate is made of metallic material, optionally aluminium material.

Optionally, the inverter is mounted to the thermally conducting plate via a thermally conductive pad. This ensures good heat transfer from the inverter to the thermally conducting plate. In addition, it will be understood that such a thermally conductive pad may facilitate visual confirmation of a thermally-conducting bond between the inverter and the thermally conducting plate, in comparison to less visible bonding solutions such as thermal paste.

Optionally, the pump system comprises a plurality of pumps and/or a plurality of electric motors and/or a plurality of inverters.

Having a plurality of pumps (and corresponding electric motors and/or inverters) allows fluid (e.g. hydraulic fluid) to be supplied to multiple circuits more efficiently than if a single pump and flow sharing valves were used.

Optionally, the pump system comprises a filling inlet for input of fluid (e.g. hydraulic fluid) into the tank.

Optionally, the housing is surrounded by sound-absorbing material (e.g. sound-absorbing foam).

Optionally, the housing is thermally insulated (e.g. formed of thermally-insulating material and/or surrounded by thermally insulating material). This helps to keep fluid (e.g. hydraulic fluid) in the tank warm which facilitates fluid system efficiency (e.g. hydraulic efficiency).

Optionally, the pump system further comprises a controller configured to set the rotation speed of the or each electric motor based on one or more user inputs and/or one or more sensor inputs such as pump pressure and system temperature.

Optionally, the pump system is configured to transfer heat generated by the electric motor to fluid flowing to or from an actuator of said fluid system.

Transferring heat generated by the electric motor to the fluid (e.g. hydraulic fluid) may increase the rate of heat rejection compared to arrangements where a motor is cooled solely via an ambient or forced flow of air. In this way, the temperature of the active components of the electric motor can be lowered, which may inhibit degradation via rotor demagnetization and can improve motor efficiency. Further this improved heat rejection facilitates improved thermal performance of the electric motor, which may allow a smaller (and lower cost) electric motor to be used to perform the same work.

In addition, such an arrangement increases the temperature of fluid (e.g. hydraulic fluid) in the fluid system, which may facilitate improved efficiency of the fluid system by reducing pumping losses. This is particularly beneficial when the pump system is used in a hydraulic system of a working vehicle because the hydraulic fluid can be heated to optimal temperature more quickly at start-up of the working vehicle.

Furthermore, transferring heat to a flow of fluid (e.g. hydraulic fluid) may increase the rate of heat rejection compared to arrangements where heat is transferred to a static reservoir of fluid. Moreover, by transferring heat to an existing flow of hydraulic fluid in a hydraulic system (i.e. a flow of fluid to a hydraulic actuator), there is no need for an additional designated motor cooling circuit (and associated pump, pipework etc.), which provides a cost-effective arrangement.

Optionally, the pump system comprises a cooling jacket surrounding the electric motor, wherein the pump system is configured such that fluid (e.g. hydraulic fluid) flows through the cooling jacket in order to transfer heat generated by the electric motor to the fluid.

Such a cooling jacket may increase the rate of heat rejection compared to arrangements where a motor is cooled solely via an ambient or forced flow of air. In this way, the temperature of the active components of the electric motor can be lowered, which inhibits degradation via rotor demagnetization and can improve motor efficiency. Further this improved heat rejection facilitates improved thermal performance of the electric motor, which allows a smaller (and lower cost) electric motor to be used to perform the same work.

In addition, such a cooling jacket increases the temperature of fluid (e.g. hydraulic fluid) flowing therethrough, which may facilitate improved efficiency of any associated fluid system (e.g. hydraulic actuation system).

A further aspect of the teachings provides a hydraulic system comprising a hydraulic pump system as disclosed herein and a load-bearing hydraulic circuit comprising one or more hydraulic actuators.

Optionally, the hydraulic system is configured so that the hydraulic pump system provides hydraulic fluid to the load-bearing hydraulic circuit.

Optionally, the hydraulic pump system comprises: a housing defining a tank for containing hydraulic fluid in use; a pump for supplying hydraulic fluid from the tank to a hydraulic system; an electric motor for driving the pump; and a cooling jacket surrounding the electric motor, wherein the hydraulic pump system is configured such that fluid (e.g. hydraulic fluid) flows through the cooling jacket in order to transfer heat generated by the electric motor to the fluid (e.g. hydraulic fluid).

It will be understood that the term "cooling jacket" refers to a heat-exchanging component which surrounds another component (e.g. the electric motor), and which has one or more flow paths therethrough for receiving a flow of fluid. In this way, heat is transferred between the component surrounded by the cooling jacket (e.g. the electric motor) and the flow of fluid through the cooling jacket.

Such a cooling jacket may increase the rate of heat rejection compared to arrangements where a motor is cooled solely via an ambient or forced flow of air. In this way, the temperature of the active components of the electric motor can be lowered, which inhibits degradation via rotor demagnetization and can improve motor efficiency. Further this improved heat rejection facilitates improved thermal performance of the electric motor, which allows a smaller (and lower cost) electric motor to be used to perform the same work.

In addition, such a cooling jacket increases the temperature of hydraulic fluid flowing therethrough, which may facilitate improved efficiency of the hydraulic system.

Optionally, the hydraulic pump system is configured so that hydraulic fluid flows through the cooling jacket in order to transfer heat generated by the electric motor to the hydraulic fluid.

In alternative embodiments, a different fluid may flow through the cooling jackets 142 in order to transfer heat generated by the electric motors 120 to the fluid. For example, air, engine coolant, HVAC fluids, or any other suitable fluid could be used instead of hydraulic fluid. It will be understood that in such alternative pump systems, the fluid may be supplied by a different fluid circuit (e.g. a pneumatic actuation circuit, an engine coolant circuit, a HVAC circuit, etc.).

Optionally, the cooling jacket is arranged to be part of the load-bearing hydraulic circuit.

In other words, hydraulic fluid flows through the cooling jacket at some point in the load-bearing hydraulic circuit. This mitigates the need for an additional designated motor cooling circuit (and associated pump, pipework etc.), which provides a cost-effective arrangement.

Optionally, the hydraulic system comprises a hydraulic fluid cooler.

Such a hydraulic fluid cooler allows excess heat (i.e. heat above an optimal operating temperature of the hydraulic fluid) to be released.

Optionally, the load-bearing hydraulic circuit comprises the hydraulic fluid cooler.

In this way, a flow of fluid to the load-bearing hydraulic circuit can be passed through the hydraulic fluid cooler in order to release heat. In other words, there is no need for an independent cooling circuit and associated cooling pump etc.

Optionally, the hydraulic fluid cooler comprises an air-cooled cooler.

Such an air-cooled cooler provides a simple means of removing heat from hydraulic fluid (e.g. using a fan).

Optionally, the hydraulic fluid cooler is located downstream of the one or more hydraulic actuators.

Optionally, the load-bearing hydraulic circuit comprises a cooler manifold having an inlet, a first outlet coupled to an inlet of the hydraulic fluid cooler and a second outlet which bypasses the hydraulic fluid cooler.

Such a cooler manifold provides a cooling flow path and a non-cooling flow path for the hydraulic fluid, which makes it easier to maintain an optimal hydraulic fluid temperature (i.e. hydraulic fluid can be selectively cooled or not cooled).

Optionally, the hydraulic system is configured to direct hydraulic fluid flowing through the inlet of the cooler manifold to the first or second outlet of the cooler manifold depending on a temperature of the hydraulic fluid.

In this way, an optimal temperature range of the hydraulic fluid can be maintained.

Optionally, the hydraulic system is configured to direct hydraulic fluid flowing through the inlet of the cooler manifold to the first outlet of the cooler manifold when a temperature of the hydraulic fluid is at or above a threshold fluid temperature, and to direct hydraulic fluid flowing through the inlet of the cooler manifold to the second outlet of the cooler manifold when the temperature of the hydraulic fluid is below the threshold fluid temperature.

In this way, an optimal temperature range of the hydraulic fluid can be maintained.

Optionally, the hydraulic system comprises a return manifold located downstream of the one or more hydraulic actuators, wherein the return manifold comprises one or more inlets, a first outlet coupled to the tank, and a second outlet coupled to an inlet of the cooling jacket.

Such a return manifold provides a flow path for cooling the electric motor and a flow path for by-passing the electric motor, which makes it easier to maintain an optimal electric motor temperature (i.e. the electric motor can be selectively cooled or not cooled).

Put another way, such a return manifold provides a flow path for heating the hydraulic fluid and a flow path not heating the hydraulic fluid, which makes it easier to maintain an optimal hydraulic fluid temperature (i.e. the hydraulic fluid can be selectively heated or not-heated).

Optionally, the return manifold comprises a first inlet coupled to an outlet of the hydraulic fluid cooler and a second inlet coupled to the second outlet of the cooler manifold.

Such an arrangement allows the return manifold to be connected to a cooled hydraulic fluid flow and/or a non-cooled hydraulic fluid flow.

Optionally, the hydraulic system is configured to direct hydraulic fluid flowing through the one or more inlets of the return manifold to the first or second outlet of the return manifold depending on a temperature of the electric motor and/or a temperature of the hydraulic fluid.

In this way, an optimal temperature range of the electric motor and/or hydraulic fluid can be maintained.

Optionally, the hydraulic system is configured to direct hydraulic fluid flowing through the one or more inlets of the return manifold to the first outlet of the return manifold when a temperature of the electric motor is below a threshold motor temperature and/or when a temperature of the hydraulic fluid is at or above a threshold fluid temperature, and to direct hydraulic fluid flowing through the inlet of the return manifold to the second outlet of the return manifold when the temperature of the electric motor is at or above the threshold motor temperature and/or when the temperature of the hydraulic fluid is below the threshold fluid temperature.

In this way, an optimal temperature range of the electric motor and/or hydraulic fluid can be maintained.

Optionally, the hydraulic pump system comprises a plurality of electric motors each driving a respective pump, and a plurality of cooling jackets each surrounding a respective electric motor.

Optionally, the hydraulic system is configured to selectively and independently direct hydraulic fluid from the return manifold to the plurality of cooling jackets depending on temperatures of the respective electric motors.

In this way, it is possible to cool some electric motors (e.g. those used for longer periods of time or under heavy loads) whilst not cooling other electric motors (e.g. those used less frequently). This allows an optimal temperature range to be more easily maintained for each electric motor.

A further aspect of the teachings provides a working vehicle comprising a pump system (e.g. a hydraulic pump system) as disclosed herein.

Such a working vehicle benefits from the advantages of the pump system and/or hydraulic system outlined above.

Optionally, the working vehicle comprises a hydraulic system as disclosed herein.

Optionally, the working vehicle is an electric working vehicle (e.g. a battery powered working vehicle); or wherein the working vehicle is a fuel cell powered working vehicle (e.g. comprising a hydrogen fuel cell for powering the working vehicle); or wherein the working vehicle is a hybrid working vehicle of the kind having an electric source of power and an alternative source of power.

The pump systems disclosed herein provide various efficiencies, which is particularly beneficial for working vehicles of this kind, where increased efficiency results in increased battery life (or fuel consumption) and periods of use between charging (or refuelling).

Optionally, the working vehicle comprises an operator cabin offset from a centreline of the working vehicle such that a centre of gravity of the operator cabin is positioned on a first side of the centreline, and wherein the pump system is mounted on the working vehicle at a second side of the centreline opposite to the first side.

In this way, the pump system acts as a counterweight to operator cabin.

Optionally, the operator cabin overlaps the centreline. In other words, although the centre of gravity and/or geometric centre of the operator cabin is to the first side of the centreline, a portion of the operator cabin is located on the second side of the centreline.

Optionally, the working vehicle comprises one or more electric energy storage devices (e.g. batteries).

Optionally, the one or more electric energy storage devices are provided at a rear of the working vehicle behind the operator cabin.

Optionally, the one or more electric energy storage devices overlaps the centreline of the working vehicle.

Optionally, the working vehicle comprises a fluid cooler (e.g. a hydraulic fluid cooler) located adjacent to the pump system.

Optionally, the fluid cooler is located at a rear of the working vehicle behind the pump system.

Optionally, the working vehicle comprises a cooling air flow path which extends from a front inlet at a front end of the working vehicle, through the pump system, through the fluid cooler, and out a rear outlet at a rear end of the working vehicle.

Optionally, the centreline extends between front and rear ends of the machine and the cooling air flow path is configured such that air flows substantially parallel to the centreline while travelling through the pump system, and then turns towards a side of the working vehicle after exiting the pump system (e.g. before, after or while travelling through the fluid cooler).

Optionally, the cooling air flow path is configured so that air exits the rear grille at an angle in the range of 15 to 75 degrees, optionally 30 to 60 degrees, optionally substantially 45 degrees, to the centreline.

Optionally, the working vehicle comprises a rear cover for covering the one or more electric energy storage devices and/or the fluid cooler. Optionally, the rear cover is removably and/or pivotally attached to the working machine.

Optionally, the working vehicle comprises a side cover for covering the pump system and/or the fluid cooler. Optionally, the side cover is removably and/or pivotally attached to the working machine.

### BRIEF DESCRIPTION OF DRAWINGS

Embodiments will now be described by way of example only with reference to the accompanying figures, in which:
Figure 1A is a schematic diagram of a hydraulic system with a hydraulic pump system, according to an embodiment;
Figures 1B and 1C are bottom views of an electric motor body and thermally conducting cooling element arrangements, according to embodiments;
Figure 2A is schematic diagram of a hydraulic pump system, according to an embodiment;
Figures 2B and 2C are bottom views of an electric motor body and thermally conducting cooling element arrangements, according to embodiments;
Figure 3 is a schematic diagram of a hydraulic system with a hydraulic pump system, according to an embodiment;
Figure 4 is a flow chart showing how hydraulic fluid is directed through the load-bearing hydraulic circuit 2001 of Figure 3;
Figure 5 is a perspective view of the internal components of a hydraulic pump system according to an embodiment;
Figure 6 is an external perspective view of the hydraulic pump system of Figure 5;
Figure 7 is a side view of the internal components of the hydraulic pump system of Figures 5 and 6;
Figure 8 is a side view of a working vehicle including a hydraulic pump system, according to an embodiment;
Figure 9 is a rear perspective view of components of the working vehicle of Figure 8;
Figure 10 is a rear perspective view of the working vehicle of Figures 8 and 9, with rear and side covers installed and over components of the working vehicle; and
Figure 11 is a rear perspective view of the working vehicle of Figures 8 to 10, with the rear and side covers in an open position.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

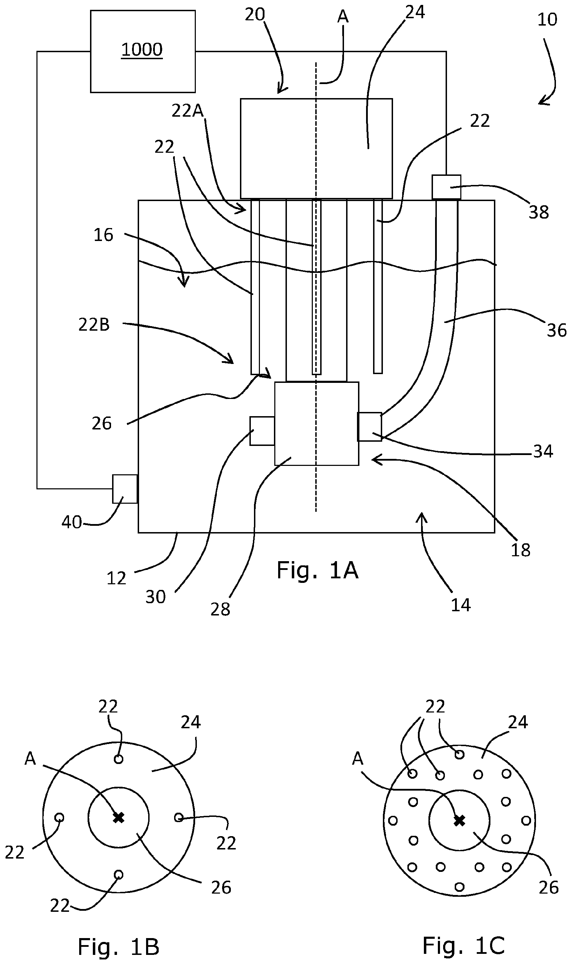

With reference to Figure 1A, a hydraulic pump system is indicated at 10. The hydraulic pump system 10 has a housing 12 defining a tank 14 for containing hydraulic fluid 16 in use. The hydraulic pump system 10 also has a pump 18 for supplying hydraulic fluid 16 from the tank 14 to a hydraulic system 1000, and an electric motor 20 for driving the pump 18.

The hydraulic pump system 10 includes one or more thermally conducting cooling elements 22 which extend from a first end 22A proximal to a body 24 of the electric motor 20 to a second end 22B within the tank 14. In particular, the illustrated hydraulic pump system 10 has a plurality of thermally conducting cooling elements 22. However, only a single thermally conducting cooling element 22 may be provided in other arrangements.

The thermally conducting cooling elements 22 allow heat to be transferred efficiently from the body 24 of the electric motor 20 to hydraulic fluid 16 contained within the tank 14. This provides multiple benefits. For example, the temperature of the active components of the electric motor 20 can be lowered, which inhibits degradation via rotor demagnetization and can improve motor efficiency. Further, the heat rejection via the one or more thermally conducting cooling elements facilitates improved thermal performance of the electric motor 20, which may allow a smaller (and lower cost) electric motor to be used to perform the same work. In addition, heat transferred via the thermally conducting cooling elements 22 increases the temperature of hydraulic fluid 16 contained within the tank 14, which may facilitate improved efficiency of the hydraulic system 1000 by reducing pumping losses due to lower viscosity of the hydraulic fluid at higher temperatures.

Each thermally conducting cooling element 22 may be a rod (e.g. a thin, solid bar of circular, square, triangular or other shaped cross section) formed of thermally conducting material (e.g. a metallic material, such as steel, aluminium or copper). Such a rod provides a simple means of transferring heat. Alternatively, each thermally conducting cooling element 22 may be a heat pipe (i.e. a heat-transfer device having a casing, a wick and a vapour cavity configured to employ phase transition to transfer heat between the first end 22A and the second end 22B). Use of such heat pipes may enhance the rate of heat rejection from the electric motor 20 to the hydraulic fluid 16 contained within the tank 14.

In the illustrated hydraulic pump system 10, the electric motor 20 is mounted on the housing 12. This minimises the distance between the body 24 of the electric motor 20 and the hydraulic fluid 16 within the tank 14, which minimises the required length of the thermally conducting cooling elements 22.

In the illustrated hydraulic pump system 10, the electric motor 20 is positioned external to the tank 14 (i.e. mounted on an external surface of the housing 12). Alternatively, the electric motor 20 may be positioned inside the tank 14 (i.e. mounted on an internal surface of the housing 12).

The connection between the thermally conducting cooling elements 22 and the body 24 of the electric motor 20 is only indicated schematically in Figure 1A, but it will be understood that a variety of coupling arrangements are possible. For example, the thermally conducting cooling elements 22 may extend from the body 24 of the electric motor 20, through the housing 12, and into the tank 14. In other words, the first ends 22A of the thermally conducting cooling elements 22 may be coupled directly to the body 24 of the electric motor 20. In this way, the thermally conducting cooling elements provide a direct link between the body 24 of the electric motor 20 and the hydraulic fluid 16 within the tank 14.

Alternatively, the body 24 of the electric motor 20 may be mounted to the housing 12 via a thermally conducting mounting arrangement (not shown), and the thermally conducting cooling elements 22 may extend from the thermally conducting mounting arrangement, through the housing 12, and into the tank 14. In other words, the first ends 22A of the thermally conducting cooling elements 22 may be coupled indirectly to the body 24 of the electric motor 20 via the thermally conducting mounting arrangement, which acts as a thermal bridge. Such a thermally conducting mounting arrangement may be made of any suitable material (e.g. a metallic material such as steel, aluminium or copper). In such arrangements, the housing 12 may include one or more openings for the thermally conducting cooling elements 22, which may be sealed (e.g. via one or more gaskets) to provide a sealed tank 14.

Alternatively, the housing 12 may have a mounting region (not shown) formed of thermally conducting material (e.g. metallic material such as steel, aluminium, or copper), the body 24 of the electric motor 20 may be mounted to an outer side of the mounting region, and the first ends 22A of the thermally conducting cooling elements 22 may be coupled to an inner side of the mounting region. In other words, the first ends 22A of the thermally conducting cooling elements 22 may be coupled indirectly to the body 24 of the electric motor 20 via the mounting region of the housing 12. In this way, the mounting region acts as a thermally-conducting bridge between the body 24 of the electric motor 20 and the thermally conducting cooling elements 22. In other words, the thermally conducting cooling elements 22 do not extend through the housing 12, which allows a sealed housing 12 to be provided more easily. In such arrangements, the housing 12 may include one or more openings for the thermally conducting cooling elements 22, which may be sealed (e.g. via one or more gaskets provided on an underside of the mounting arrangement) to provide a sealed tank 14.

The electric motor 20 of Figure 1A has a rotating shaft (not shown) which defines an axis A. The pump 18 has a body 26 which extends at least partially into the tank 14 in a direction defined by the axis A. Each of the thermally conducting cooling elements 22 extends parallel to the axis A, and the plurality of thermally conducting cooling elements are arranged radially outside of the body 26 of the pump 18 with respect to the axis A. In this way, the thermally conducting cooling elements 22 do not obstruct the pump 18 from being connected to the shaft of the electric motor 20 in order to drive the pump 18.

The plurality of thermally conducting cooling elements 22 may be arranged in a ring surrounding the body 26 of the pump 18. For example, Figure 1B shows a first configuration in which four thermally conducting cooling elements 22 are arranged in a ring surrounding the body 26 of the pump 18. Figure 1C shows a second configuration in which sixteen thermally conducting cooling elements 22 are arranged in two rings surrounding the body 26 of the pump 18. In particular, Figure 1C shows eight thermally conducting cooling elements 22 in an inner ring surrounding the body 26 of the pump 18, and eight thermally conducting cooling elements 22 in an outer ring surrounding the inner ring and the body 26 of the pump 18.

The body 26 of the pump 18 has an inlet portion 28 which defines a pump inlet. The inlet portion 28 of the body 26 extends into the tank 14 such that the pump inlet 30 is immersed in hydraulic fluid 16 contained in the tank 14 in use. A filter or strainer arrangement may be coupled to the pump inlet 30. The inlet portion 28 of the body 26 may extend into the tank 14 such that the filter or strainer arrangement is immersed in hydraulic fluid 16 contained in the tank 14 in use.

In the hydraulic pump system 10 of Figure 1A, the pump 18 has a pump outlet 34, and the pump system 10 has a fluid supply line 36 connected to the pump outlet 34 for channelling hydraulic fluid 16 supplied by the pump 18 out of the housing 12. The fluid supply line 36 may be coupled to a mounting arrangement for the electric motor 20, so that the fluid supply line 36 can be attached/detached from the pump system 10 with the electric motor 20 and mounting arrangement.

The housing 12 has a fluid supply port 38 coupled to the fluid supply line 36 for connection to a hydraulic system 1000, in order to supply hydraulic fluid 16 from the pump 18 to the hydraulic system 1000. The fluid supply port 38 is arranged to be external to the tank 14 (i.e. on an external surface of the housing 12). The housing 12 also has a fluid return port 40 for connection to the hydraulic system 1000, in order to receive a return flow of hydraulic fluid 16 from the hydraulic system 1000. The housing 12 may also have a filling inlet (not shown) for input of hydraulic fluid 16 into the tank 14.

In the illustrated pump system 10, the housing 12 is connected with the pump 18 and the electric motor 20 so as to form a single unit. In this way a compact pump assembly 10 is provided which can easily be installed/removed from a working vehicle or other machinery as a single unit.

The housing 12 may have one or more anti-vibration mounts for coupling the single unit to a working vehicle. The one or more anti-vibration mounts may be provided on a different (e.g. opposite) side of the housing 12 to the electric motor 20 (e.g. towards a bottom end of the housing 12). This may inhibit transfer of vibrations from the pump 18 and/or electric motor 20 through the housing 12 to the working vehicle or other machinery on which the single unit is mounted and vice versa.

The housing 12 may have a plurality of anti-vibration mounts (e.g. three or more anti-vibration mounts) provided on at least two sides of the housing 12, which facilitates a secure coupling between the housing and a working vehicle or other machinery.

The housing 12 may be surrounded by sound-absorbing material (e.g. sound-absorbing foam). The housing 12 may be thermally insulated (e.g. formed of thermally-insulating material and/or surrounded by thermally insulating material). This helps to keep hydraulic fluid 16 in the tank 14 warm, which facilitates hydraulic system efficiency.

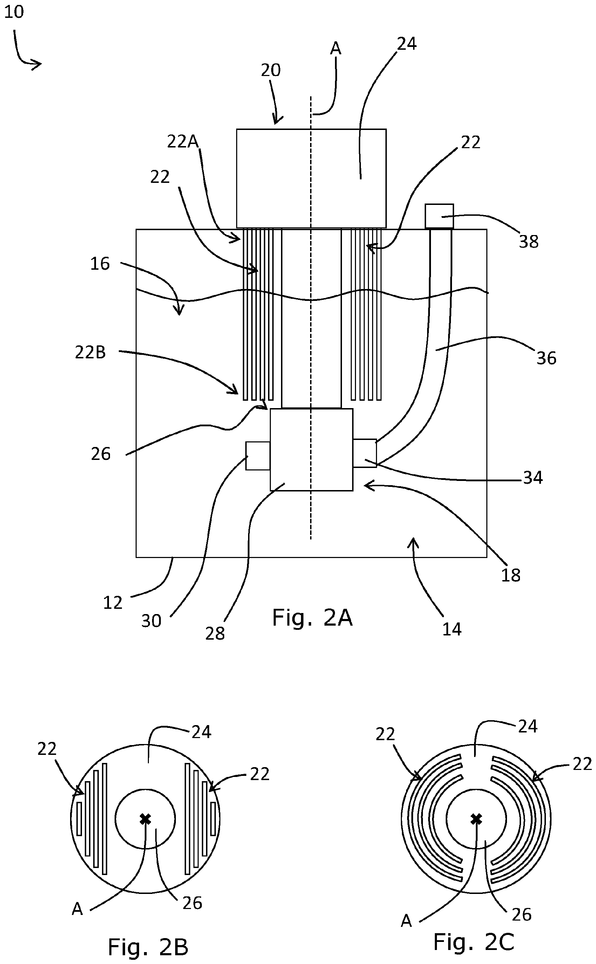

Referring now to Figure 2A, a further hydraulic pump system 10 is indicated. The hydraulic pump system 10 of Figure 2A is identical to the hydraulic pump system 10 of Figure 1A apart from the configuration of thermally conducting cooling elements 22. The same reference numerals are used and only differences are described in detail.

In the hydraulic pump system of Figure 2A, the thermally conducting cooling elements 22 are provided as fins formed of thermally conducting material (e.g. metallic material such as steel, aluminium or copper). In this context, it will be understood that the term "fin" means a projection with a comparatively thin thickness in comparison to its width and length.

The thermally conducting cooling elements 22 may be straight fins (e.g. as illustrated in Figure 2B) or curved fins (e.g. as illustrated in Figure 2C).

Alternatively, one or more thermally conducting cooling elements 22 may be provided as a hollow cylinder which completely surrounds the body 26 of the pump 18.

In the hydraulic pump systems 10 of Figures 1A and 2A, the output of hydraulic fluid 16 from the pump 18 may be controlled via rotation speed of the electric motor 20. An inverter (not shown) may be provided for controlling frequency of power supplied to the electric motor 20. Such an inverter enables variable speed control of the electric motor 20 and DC to AC power smoothing/conversion. This is useful in applications where the electric motor 20 is powered by a DC electricity source (e.g. a battery on an electric working vehicle or a fuel cell on a fuel cell powered working vehicle).

The hydraulic pump systems 10 of Figures 1A and 2A may also include a controller (not shown) configured to set the rotation speed of the electric motor 20 based on one or more user inputs (not shown) and/or one or more sensor inputs (not shown) such as pump pressure and system temperature. Such a controller may send an output signal to the inverter to control the rotation speed of the electric motor 20.

Although the hydraulic pump systems 10 of Figures 1A and 2A only show a single motor 20 and pump 18 coupled to the housing 12, it will be understood that a plurality of pumps 18 (i.e. two or more pumps 18) and/or a plurality of electric motors 20 (i.e. two or more electric motors 20) may be provided. For example, three or more pumps 18 and three or more electric motors 20 may be coupled to the housing 12 in a similar way to the illustrated pump 18 and electric motor 20. Such a plurality of pumps 18 (and corresponding electric motors 20) allows hydraulic fluid 16 to be supplied to multiple circuits more efficiently than if a single pump and flow sharing valves were used. In such pump systems 10, a corresponding plurality of inverters may be provided. In such pump systems, thermally conducting cooling elements 22 may be provided for cooling each of the plurality of electric motors 20.

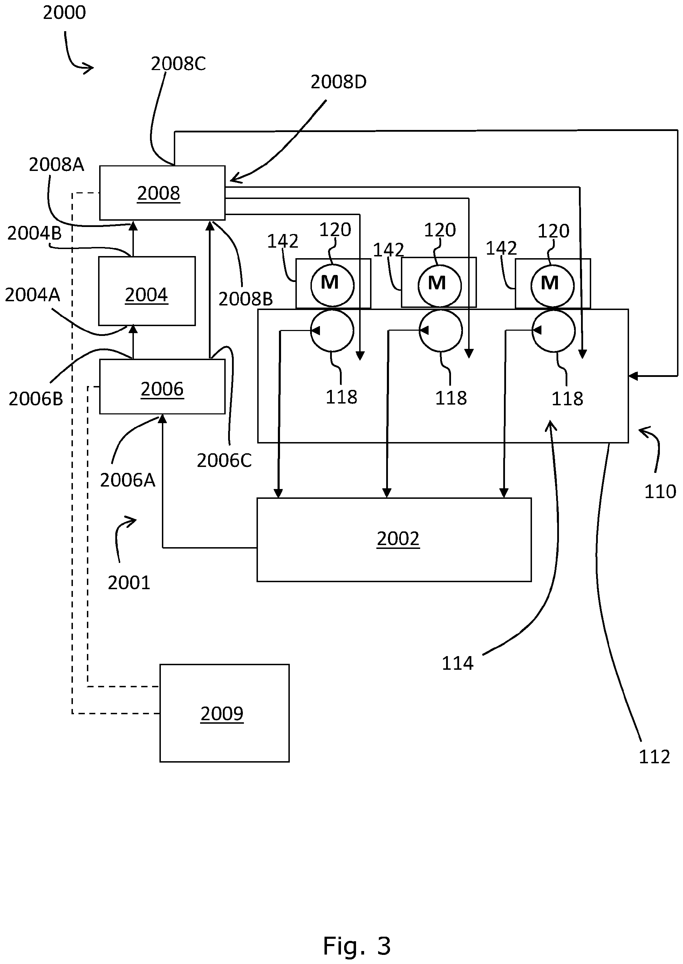

Referring now to Figure 3, a further hydraulic pump system is indicated at 110. Features which are common to the hydraulic pump systems 10 of Figures 1A and 2A are given the prefix "1" and only differences are described in detail.

Similar to the hydraulic pump systems 10 of Figures 1A and 2A, the hydraulic pump system 110 of Figure 3 includes a housing 112 defining a tank 114 for containing hydraulic fluid in use. However, there are three pumps 118 for supplying hydraulic fluid from the tank 114 to a hydraulic system, and three electric motors 120 for driving the pumps 118. In alternative arrangements, the hydraulic pump system 110 may include a different number of pumps 118 and electric motors 120 (e.g. a single pump 118 and electric motor 120, or a different plurality of pumps 118 and electric motors 120).

As will be described in more detail below, the hydraulic pump system 110 is configured to transfer heat generated by the electric motors 12 to a flow of hydraulic fluid (e.g. hydraulic fluid flowing to or from a hydraulic actuator of a hydraulic system). This may increase the rate of heat rejection compared to arrangements where heat is transferred to a static reservoir of fluid. In addition, by transferring heat to an existing flow of hydraulic fluid in a hydraulic system (i.e. a flow of fluid to a hydraulic actuator), there is no need for an additional designated motor cooling circuit (and associated pump, pipework etc.), which provides a cost-effective arrangement.

The hydraulic pump system 110 of Figure 3 is part of a hydraulic system 2000. The hydraulic system 2000 has a load-bearing hydraulic circuit 2001 which includes one or more hydraulic actuators 2002. The hydraulic system 2000 is configured so that the hydraulic pump system 110 provides hydraulic fluid to the load-bearing hydraulic circuit 2001.

The hydraulic pump system 110 includes three cooling jackets 142 each surrounding a respective electric motor 120. The hydraulic pump system 110 is configured such that hydraulic fluid flows through the cooling jackets 142 in order to transfer heat generated by the electric motors 120 to the hydraulic fluid. It will be understood that the term "cooling jacket" refers to a heat-exchanging component which surrounds another component (e.g. one of the electric motors 120), and which has one or more flow paths therethrough (not shown) for receiving a flow of fluid. In this way, heat is transferred between the components surrounded by the cooling jackets 142 (e.g. the electric motors 120) and the flow of hydraulic fluid through the cooling jackets 142.

In alternative pump systems, a different fluid may flow through the cooling jackets 142 in order to transfer heat generated by the electric motors 120 to the fluid. For example, air, engine coolant, HVAC fluids, or any other suitable fluid could be used. It will be understood that in such alternative pump systems, the fluid may be supplied by a different fluid circuit (e.g. a pneumatic actuation circuit, an engine coolant circuit, a HVAC circuit, etc.).

The cooling jackets 142 may be provided instead of, or in addition to, one or more thermally conducting cooling elements 22 of the kind described above in relation to Figures 1A to 2C. In other words, although not shown in Figure 3, there may be one or more thermally conducting cooling elements 22 which supplement the heat rejection provided by the cooling jackets 142.

In the illustrated hydraulic system 2000, the cooling jackets 142 are arranged to be part of the load-bearing hydraulic circuit 2001. In other words, hydraulic fluid flows through the cooling jackets 142 at some point in the load-bearing hydraulic circuit 2001. In alternative hydraulic systems, an additional designated motor cooling circuit (and associated pump, pipework etc.) separate to the load-bearing circuit may be provided.

The hydraulic system 2000 has a hydraulic fluid cooler 2004, which allows excess heat (i.e. heat above an optimal operating temperature of the hydraulic fluid) to be released. The load-bearing hydraulic circuit 2001 includes the hydraulic fluid cooler 2004. In this way, a flow of hydraulic fluid to the load-bearing hydraulic circuit 2001 can be passed through the hydraulic fluid cooler 2004 in order to release heat. In alternative hydraulic systems, the hydraulic fluid cooler is part of an independent cooling circuit, with an associated cooling pump etc. In alternative hydraulic systems, the hydraulic fluid cooler may be omitted entirely (e.g. where the hydraulic system 2000 is for a working vehicle which typically operates in climate/operating conditions that are unlikely to lead to excessive hydraulic fluid temperatures).

The hydraulic fluid cooler 2004 may be an air-cooled cooler, which provides a simple means of removing heat from hydraulic fluid (e.g. using a fan).

The hydraulic fluid cooler 2004 may be located downstream of the one or more hydraulic actuators 2002 (as illustrated in Figure 3) or, alternatively, upstream of the one or more hydraulic actuators 2002.

The hydraulic system 2000 of Figure 3 has a cooler manifold 2006 which, in this arrangement, is part of the load-bearing hydraulic circuit 2001. The cooler manifold 2006 has an inlet 2006A, a first outlet 2006B coupled to an inlet 2004A of the hydraulic fluid cooler 2004 and a second outlet 2006C which bypasses the hydraulic fluid cooler 2004. In this way, the cooler manifold 2006 provides a cooling flow path and a non-cooling flow path for the hydraulic fluid, which makes it easier to maintain an optimal hydraulic fluid temperature (i.e. hydraulic fluid can be selectively cooled or not cooled).

The load-bearing hydraulic circuit 2001 also has a return manifold 2008 located downstream of the one or more hydraulic actuators 2002. The return manifold 2008 has one or more inlets. In particular, the return manifold 2008 has a first inlet 2008A coupled to an outlet 2004B of the hydraulic fluid cooler 2004, and a second inlet 2008B coupled to the second outlet 2006C of the cooler manifold 2006. The return manifold 2008 also has a first outlet 2008C coupled to the tank 114, and second to fourth outlets 2008D each coupled to an inlet of a respective one of the cooling jackets 142. Such a return manifold 2008 provide flow paths for cooling the electric motors 120 and a flow path for by-passing the electric motors 120, which makes it easier to maintain optimal electric motor temperatures (i.e. the electric motors 120 can be selectively cooled or not cooled). Put another way, such a return manifold 2008 provides flow paths for heating the hydraulic fluid and a flow path not heating the hydraulic fluid, which makes it easier to maintain an optimal hydraulic fluid temperature (i.e. the hydraulic fluid can be selectively heated by the electric motors 120 or not).

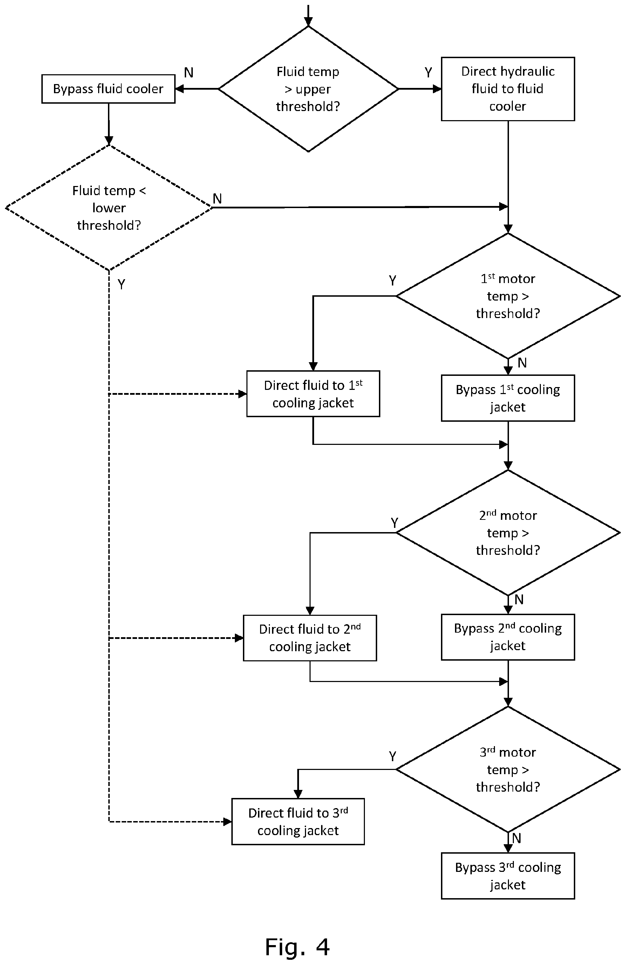

The hydraulic system 2000 is configured to direct hydraulic fluid flowing through the inlet 2006A of the cooler manifold 2006 to the first or second outlet 2006B, 2006C of the cooler manifold 2006 depending on a temperature of the hydraulic fluid, as will be described in more detail below with reference to the flow chart of Figure 4. In this way, an optimal temperature range of the hydraulic fluid can be maintained.

The hydraulic system 2000 is also configured to direct hydraulic fluid flowing through the one or more inlets 2008A, 2008B of the return manifold 2008 to the first to fourth outlets 2008C, 2008D of the return manifold 2008 depending on a temperature of the electric motor 120 and/or a temperature of the hydraulic fluid, as will be described in more detail below with reference to the flow chart of Figure 4. In this way, an optimal temperature range of the electric motor 120 and/or hydraulic fluid can be maintained.

The hydraulic system 2000 has a controller 2009 which is configured to control the cooler manifold 2006 and return manifold 2008. For example, the controller 2009 may send signals to open/close one or more valves (not shown) of the cooler and return manifolds 2006, 2008 in order to direct the flow of hydraulic fluid therethrough. The controller 2009 may also be configured to set the rotation speed of the electric motors 120 based on one or more user inputs (not shown) and/or one or more sensor inputs (not shown) such as pump pressure and system temperature, in order to control output of hydraulic fluid from the respective pumps 118. The controller 2009 may send output signals to one or more inverters (not shown) to control the rotation speed of the electric motors 120.

Referring now to Figure 4, a flow chart showing how hydraulic fluid is directed through the load-bearing hydraulic circuit 2001 of Figure 3 is indicated.

The hydraulic system 2000 is configured to determine whether a temperature of the hydraulic fluid is at or above a threshold fluid temperature (e.g. an upper fluid temperature above which degradation of the hydraulic fluid may occur). A temperature sensor (not shown) may be located in the tank 114 or any part of the load-bearing hydraulic circuit 2001, in order to determine the temperature of the hydraulic fluid. Alternatively, the temperature of the hydraulic fluid may be determined indirectly (e.g. by measuring the temperature of pipework or hydraulic components and inferring a temperature of the hydraulic fluid from such measurements).

If it is determined that the temperature of hydraulic fluid is at or above the threshold fluid temperature, the hydraulic system 2000 is configured to direct hydraulic fluid flowing through the inlet 2006A of the cooler manifold 2006 to the first outlet 2006B of the cooler manifold 2006. In this way, the hydraulic fluid is directed to the hydraulic fluid cooler 2004 which lowers the temperature of the hydraulic fluid.

If it is determined that the temperature of hydraulic fluid is below the threshold fluid temperature, the hydraulic system 2000 is configured to direct hydraulic fluid flowing through the inlet 2006A of the cooler manifold 2006 to the second outlet 2006C of the cooler manifold 2006. In this way, the hydraulic fluid bypasses the fluid cooler 2004, which maintains a temperature of the hydraulic fluid.

In the flow chart of Figure 4, the flow through the cooler manifold 2006 goes either fully to the first outlet 2006B or fully to the second outlet 2006C of the cooler manifold 2006. However, in alternative configurations the flow may, in some operating conditions, be split between the first and second outlets 2006B, 2006C of the cooler manifold 2006 (e.g. when an intermediate amount of cooling is required).

The hydraulic system 2000 is further configured to determine whether a temperature of each electric motor 120 is below a threshold motor temperature. Temperature sensors (not shown) may be provided to measure the temperatures of the electric motors 120. The temperatures of the electric motors 120 may be measured directly (e.g. with sensors directly contacting the bodies of the electric motors 120), or indirectly. Alternatively, the temperatures of the electric motors 120 may be estimated based on inputs to the electric motors 120 (e.g. power drawn by the electric motors 120).

If it is determined that the temperature of each electric motor 120 is below the threshold motor temperature, the hydraulic system 2000 is configured to direct all of the hydraulic fluid flowing through the one or more inlets 2008A, 2008B of the return manifold 2008 to the first outlet 2008C of the return manifold. In this way, hydraulic fluid bypasses the cooling jackets 142 and the electric motors 120 are not cooled by the hydraulic fluid.

If it is determined that the temperature of any of the electric motors 120 is at or above the threshold motor temperature, the hydraulic system 2000 is configured to direct at least some of the hydraulic fluid flowing through the one or more inlets 2008A, 2008B of the return manifold to the respective outlet 2008D. In this way, hydraulic fluid is directed to the cooling jacket 142 of any electric motor 120 which is at or above the threshold motor temperature, which cools the electric motor 120 with the hydraulic fluid.

It will be understood that when more than one of the electric motors 120 is above the threshold motor temperature, the hydraulic system 2000 is configured to direct hydraulic fluid to the respective second to fourth outlets 2008D of the return manifold 2008. In other words, a flow of hydraulic fluid through the return manifold 2008 is split into multiple fluid flows through the respective cooling jackets 142.

Put another way, the hydraulic system 2000 is configured to selectively and independently direct hydraulic fluid from the return manifold 2008 to the plurality of cooling jackets 142 depending on temperatures of the respective electric motors 120. In this way, it is possible to cool some electric motors 120 (e.g. those used for longer periods of time or under heavier loads) whilst not cooling other electric motors (e.g. those used less frequently or under lighter loads). This allows an optimal temperature range to be more easily maintained for each electric motor 120.

Figure 4 also shows an optional step in which it is determined whether the temperature of the hydraulic fluid is below a threshold fluid temperature (e.g. a lower fluid temperature below which hydraulic system efficiency is reduced due to viscosity of the hydraulic fluid). If it is determined that the temperature of the hydraulic fluid is below the threshold fluid temperature, the hydraulic system 2000 is configured to direct hydraulic fluid flowing through the one or more inlets 2008A, 2008B of the return manifold to at least one of the second to fourth outlets 2008D of the return manifold. In this way, hydraulic fluid is directed to the cooling jacket 142 of at least one of the electric motors 120 which heats the hydraulic fluid with heat generated by the electric motor 120. Such an arrangement may allow the hydraulic fluid to more quickly reach an optimal temperature at start-up of the hydraulic system 2000, even if the electric motors 120 do not need to be cooled at that moment.

It will be understood that the hydraulic system 1000 of Figure 1A may have a similar load-bearing circuit, cooler manifold and hydraulic fluid cooler to those described in relation to Figures 3 and 4.

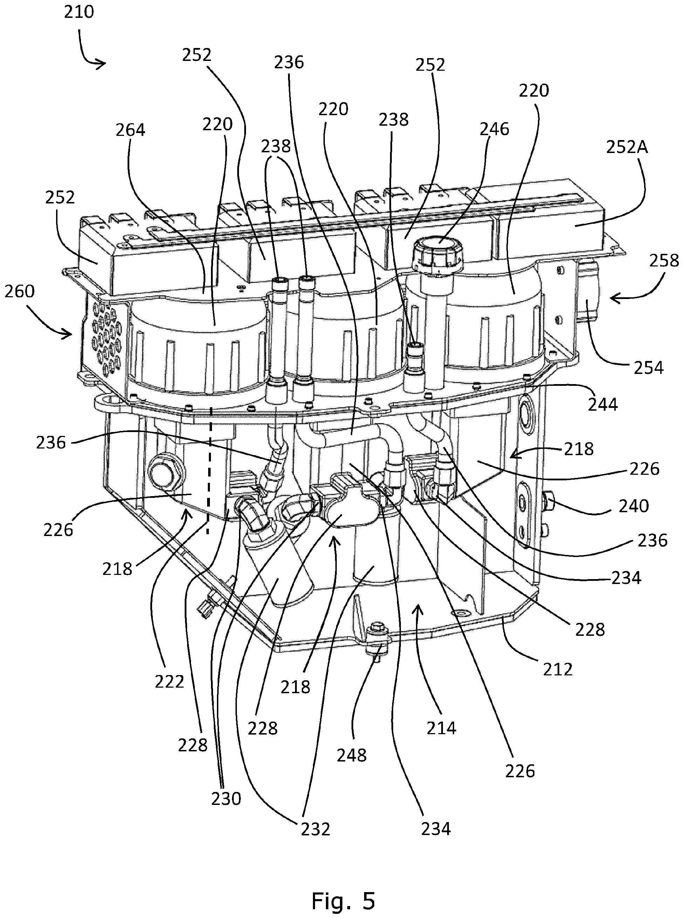

Referring now to Figures 5 to 7, a further hydraulic pump system is indicated at 210. Features which are common to the hydraulic pump systems 10, 110 of Figures 1A, 2A and 3 are given the prefix "2" and only differences are described in detail.

Similar to the hydraulic pump systems 10, 110 of Figures 1A, 2A and 3 the hydraulic pump system 210 of Figures 5 to 7 includes a housing 212 defining a tank 214 for containing hydraulic fluid in use. There are three pumps 218 for supplying hydraulic fluid from the tank 214 to a hydraulic system (not shown), and three electric motors 220 for driving the pumps 218. In alternative arrangements, the hydraulic pump system 210 may include a different number of pumps 218 and electric motors 220 (e.g. a single pump 218 and electric motor 220, or a different plurality of pumps 218 and electric motors 220).

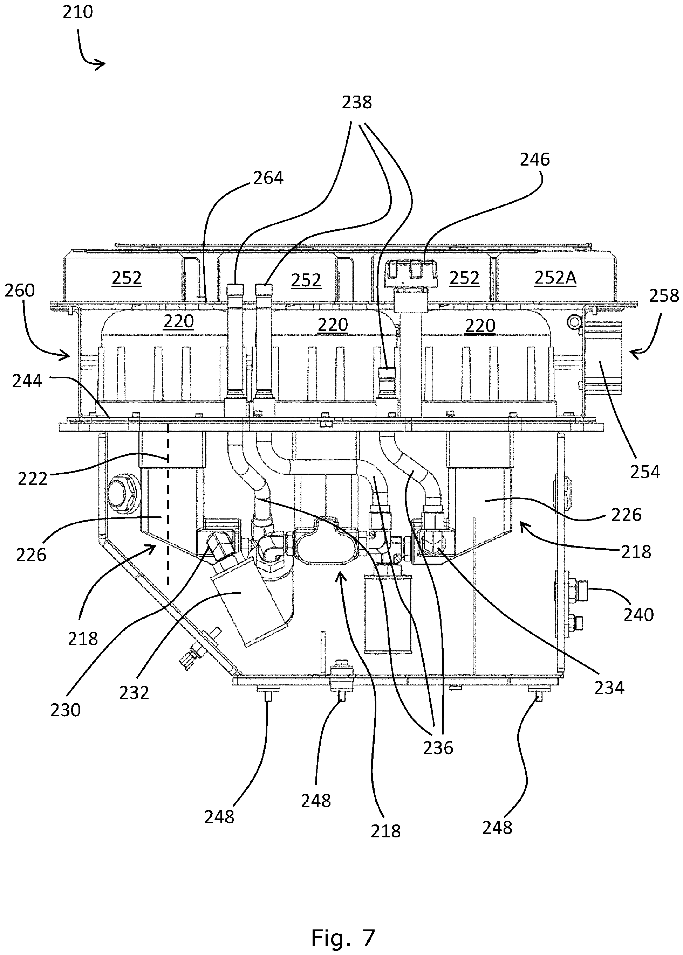

The hydraulic pump system 210 may optionally include one or more thermally conducting cooling elements 222 of the kind described above in relation to Figures 1A to 2C (shown schematically as dashed lines on Figures 5 and 7). The hydraulic pump system 210 may also optionally include one or more cooling jackets (not shown) of the kind described above in relation to Figure 3 (e.g. surrounding one or more of the electric motors 220). In this way, the hydraulic pump system 210 may be suitable for use in the hydraulic system 2000 described above in relation to Figures 3 and 4.

In the hydraulic pump system 210 of Figures 5 to 7, the electric motors 220 are positioned external to the tank 214 and are mounted on the housing 212 (i.e. on an external surface of the housing 212). In particular, the electric motors 220 are connected to a mounting arrangement 244 which is releasably coupled to the rest of the housing 212. The mounting arrangement 244 is, in this configuration, a single plate which serves as an upper surface (e.g. lid) for the housing 212. In other words, the housing 212 has an open upper end which is covered by the mounting arrangement 244. In alternative arrangements, the mounting arrangement 244 may include a separate mounting plate for each electric motor 220, with each mounting plate covering an aperture in an upper surface of the housing 212. Alternatively, the mounting arrangement 244 may be of any other suitable configuration.

The electric motors 220 each have a rotating shaft (not shown) which defines an axis A. The pumps 218 each have a body 226 which extends at least partially into the tank 214 in a direction defined by the axis A. The bodies 226 of the pumps 218 each have an inlet portion 228 which defines a pump inlet 230. A filter or strainer arrangement 232 is optionally coupled to the pump inlet 230. The inlet portions 228 of the bodies 226 extend into the tank 214 such that the pump inlets 230 (or at least the filter or strainer arrangement 232) are immersed in hydraulic fluid contained in the tank 214 in use. The pumps 218 each have a pump outlet 234, and the hydraulic pump system 210 has fluid supply lines 236 connected to the pump outlets 234 for channelling hydraulic fluid supplied by the pumps 218 out of the housing 212. The fluid supply lines 236 are optionally coupled to the mounting arrangement 244 for the electric motors 220, so that the fluid supply lines 236 can be attached/detached from the hydraulic pump system 210 with the electric motors 220 and mounting arrangement 244. The housing 212 has fluid supply ports 238 coupled to the fluid supply lines 236 for connection to a hydraulic system (not shown), in order to supply hydraulic fluid from the pumps 218 to the hydraulic system. The fluid supply ports 238 are arranged to be external to the tank 214 (i.e. on an external surface of the housing 212). In particular, the fluid supply ports 238 may be provided on the mounting arrangement 244. The housing 212 also has a fluid return port 240 for connection to a hydraulic system, in order to receive a return flow of hydraulic fluid from the hydraulic system. The housing 212 may also have a filling inlet 246 for input of hydraulic fluid into the tank 214.

It will be understood that the components of the hydraulic pump system 210 are connected together so as to form a single unit. In other words, the housing 212, mounting arrangement 244, pumps 218, electric motors 220, and inverters 252, 252A (described below) are connected together so as to form a single unit. In this way a compact pump assembly 210 is provided which can easily be installed/removed from a working vehicle or other machinery as a single unit.

The housing 212 of the hydraulic pump system 210 of Figures 5 to 7 has one or more anti-vibration mounts 248 for coupling the single unit to a working vehicle. In particular, there are three anti-vibration mounts 248, a first anti-vibration mount 248 being provided on a first side of the housing 212 and second and third anti-vibration mounts 248 being provided on an opposite side of the housing 212, but other numbers of anti-vibration mounts 248 may be provided in alternative configurations.

The anti-vibration mounts 248 are provided on an opposite end of the housing 212 to the electric motors 220. In particular, the electric motors 220 are provided on an upper end of the housing 212 and the anti-vibration mounts 248 are provided on a lower end of the housing.

The housing 212 may be surrounded by sound-absorbing material 250 (e.g. sound-absorbing foam). The housing 212 may be thermally insulated (e.g. formed of thermally-insulating material and/or surrounded by thermally insulating material). The housing 212 may be surrounded by a material (e.g. foam) which is both sound-absorbing and thermally-insulating.

In the hydraulic pump system 210 of Figures 5 to 7, the output of hydraulic fluid from the pumps 18 may be controlled via rotation speed of the electric motor 220. A plurality of inverters 252 are provided for controlling frequency of power supplied to the electric motors 220. Such inverters 252 enable variable speed control of the electric motors 220 and DC to AC power smoothing/conversion. This is useful in applications where the electric motors 220 are powered by a DC electricity source (e.g. a battery on an electric working vehicle or a fuel cell on a fuel cell powered working vehicle). In the illustrated hydraulic pump system 210, there are three inverters 252 for controlling frequency of power supplied to the electric motors 220 which drive the pumps 218. There is also a fourth inverter 252A for controlling frequency of power to an additional electric motor (not shown) used for actuating a different portion of a working vehicle or other machinery. For example, the fourth inverter 252A may control frequency of power applied to a slewing motor of a working vehicle.

The hydraulic pump system 210 of Figures 5 to 7 may also include a controller (not shown) configured to set the rotation speeds of the electric motors 220 based on one or more user inputs (not shown) and/or one or more sensor inputs (not shown) such as pump pressure and system temperature. Such a controller may send output signals to the inverters 252, 252A to control the rotation speeds of the electric motors 220.

The hydraulic pump system 210 of Figures 5 to 7 has a fan 254 configured to cool the electric motors 220 and/or inverters 252, 252A. The fan 254 may be used to replace or supplement cooling achieved by way of the thermally conducting cooling elements and/or cooling jackets described above in relation to Figures 1A to 3.

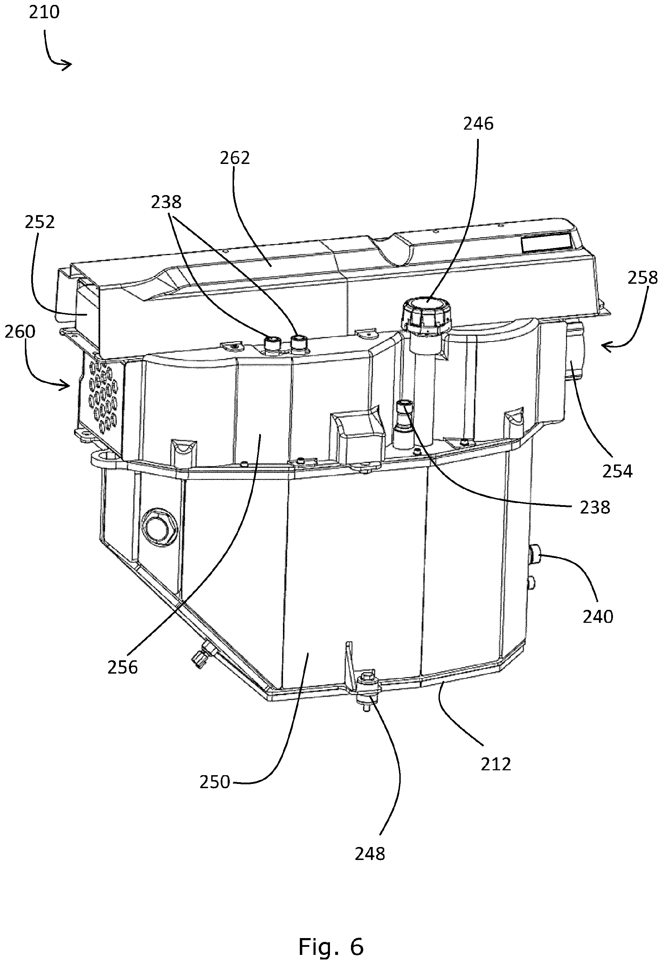

The hydraulic pump system 210 has a motor cover 256 (shown in Figure 6) for covering the electric motors 220. In Figures 5 and 7, the motor cover 256 has been partially omitted to illustrate the components underneath. The motor cover 256 provides multiple functions. Firstly, the motor cover 256 protects the electric motors 220 from being damaged by ingress of water (e.g., rainwater), impact or dirt/debris. Secondly, the motor cover 256 increases safety by covering high power electrical components/circuits/connections. Thirdly, the motor cover 256 reduces the transmission of noise generated by the electric motors 220, which results in a quieter hydraulic pump system 210.

The motor cover 256 has an inlet 258 and an outlet 260. The electric motors 220 are arranged between the inlet 258 and the outlet 260. The fan 254 is configured to blow air through the motor cover 256 from the inlet 258 to the outlet 260 (i.e. into the motor cover 256 via the inlet 258, past the electric motors 220 and out of the motor cover 256 via the outlet 260). In the illustrated arrangement, the fan 254 is mounted to the inlet 258 of the motor cover 256. Alternatively, the fan 254 may be remote from the motor cover 256 and a duct may be provided to feed air from the fan 254 to the inlet 258.

The hydraulic pump system 210 also has an inverter cover 262 separate to the motor cover 256 (shown in Figure 6). In Figures 5 and 7, the inverter cover 262 has been omitted to illustrate the components underneath. The inverter cover 262 protects the inverters 252, 252A from being damaged by impact or dirt/debris and improves safety by covering high power inverter circuitry/connections. Alternatively, the inverters 252, 252A may be provided under the same cover 256 as the electric motors 220.

The motor cover 256 and/or the inverter cover 262 may be made of plastics material, which provides a lightweight and electrically insulating arrangement. Alternatively, the motor cover 256 and/or the inverter cover 262 may be made of any other suitable material (e.g. metallic material).

The motor cover 256 and/or inverter cover 262 may each be made of one or more separate portions (e.g. panels).

In order to provide access to the fluid supply ports 238 and filling inlet 246, the motor cover 256 has an aperture through which two of the fluid supply ports 238 and associated fluid supply lines 236 extend, and an external recess in which the other of the fluid supply ports 238 and the filling inlet 246 are located. The motor cover 256 may have any other suitable combination of apertures and/or recesses to accommodate the fluid supply ports 238 and filling inlet 246. In arrangements where the fluid supply ports 238 and/or filling inlet 246 are located elsewhere, such aperture(s) and/or recess(es) may be omitted.

In the illustrated hydraulic pump system 210, the inverters 252, 252A are mounted to a thermally conducting plate 264 above the electric motors 220. The fan 254 is configured to blow air underneath the thermally conducting plate 264 in order to simultaneously cool the electric motors 220 and the inverters 252, 252A. Such a configuration provides a laterally compact arrangement (compared to locating the inverters 252, 252A and electric motors 220 side-by-side) which is useful for packaging purposes. Furthermore, having the thermally conducting plate 264 ensures that air flowing under the inverters 252, 252A (i.e. past the electric motors 220) can simultaneously cool both sets of components. This removes the need for a separate cooling fan for the inverters 252, 252A. Moreover, the thermally conducting plate 264 provides an increased thermal mass and surface area in comparison to individual inverter heat sinks, which may increase rejection of heat.

The thermally conducting plate may be made of metallic material (e.g. aluminium material).

The inverters 252, 252A may be mounted to the thermally conducting plate 264 via one or more thermally conductive pads (not shown). It will be understood that such one or more thermally conductive pads may facilitate visual confirmation of a thermally-conducting bond between the inverters 252, 252A and the thermally conducting plate 264, in comparison to less visible bonding solutions such as thermal paste. Furthermore, such thermally conductive pads provide a more repeatable and controllable thermally-conductive bond than other solutions, such as thermal paste.

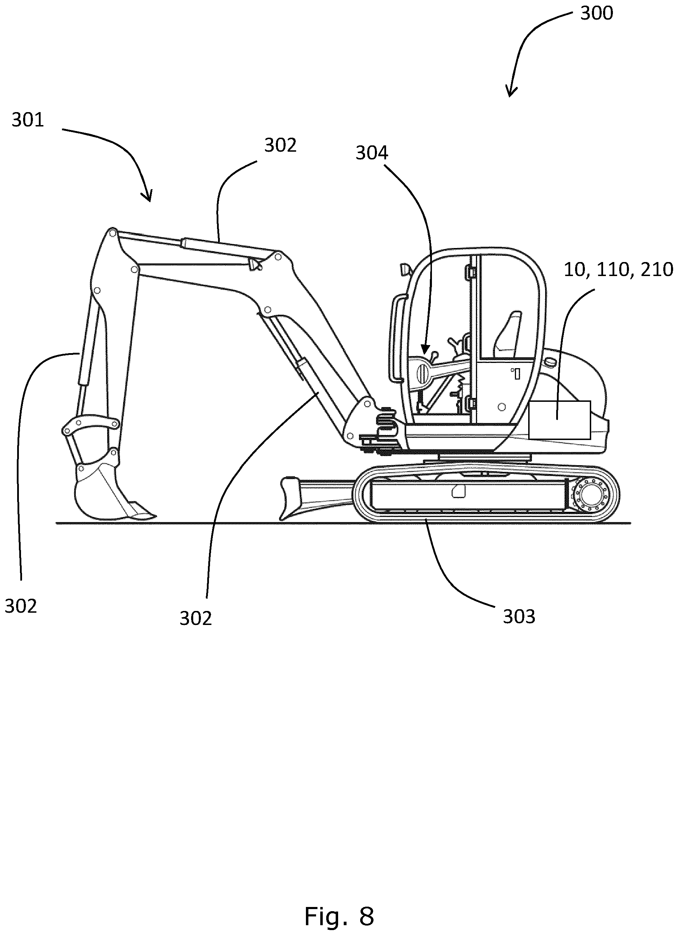

Referring now to Figure 8, a working vehicle is indicated at 300. The working vehicle 300 includes a working arm 301 controlled by a plurality of hydraulic actuators 302. The working vehicle 300 also includes a pair of left and right tracks 303 for moving the working vehicle 300. The left and right tracks 303 are driven by respective hydraulic motors (not shown). A set of user inputs 304 (e.g. joysticks, levers, buttons, pedals etc.) are provided on the working vehicle 300 for controlling movement of the working vehicle 300 and the working arm 301.

The working vehicle 300 may be an electric working vehicle (e.g. a battery powered working vehicle), a fuel cell powered working vehicle (e.g. comprising a hydrogen fuel cell for powering the working vehicle), or a hybrid working vehicle of the kind having an electric source of power and an alternative source of power.

The working vehicle 300 also includes a hydraulic pump system as described above (e.g. the hydraulic pump system 10 of Figure 1A, the hydraulic pump system 10 of Figure 2A, the hydraulic pump system 110 of Figure 3, or the hydraulic pump system 210 of Figures 5 to 7). The hydraulic pump system 10, 110, 210 (illustrated schematically on Figure 8) is provided to supply hydraulic fluid to the hydraulic actuators 302 and left/right track motors of the working vehicle 300. As has been outlined above, the hydraulic pump systems 10, 110, 210 of Figures 1A to 7 are compact and provide various efficiencies. This provides significant benefits when applied to a working vehicle 300 (where space is restricted and power is of limited capacity), particularly when the working vehicle 300 is an electric working vehicle where increased efficiency results in increased battery life and periods of use between charging, or a fuel cell powered working vehicle where reduced energy losses result in reduced fuel consumption.

The illustrated working vehicle 300 is of the type known as an excavator. Alternatively, the working vehicle 300 may be a different type of vehicle. For example, the working vehicle 300 may be a backhoe loader, telehandler, skid-steer loader, dumper, forklift truck or other type of working vehicle having one or more hydraulically-actuated devices. Alternatively, the hydraulic pump system 10, 110 210 may be part of a hydraulic system of a static application rather than a mobile application. For example, the hydraulic pump system 10, 110, 210 may be part of an industrial hydraulic system in a manufacturing or processing plant.

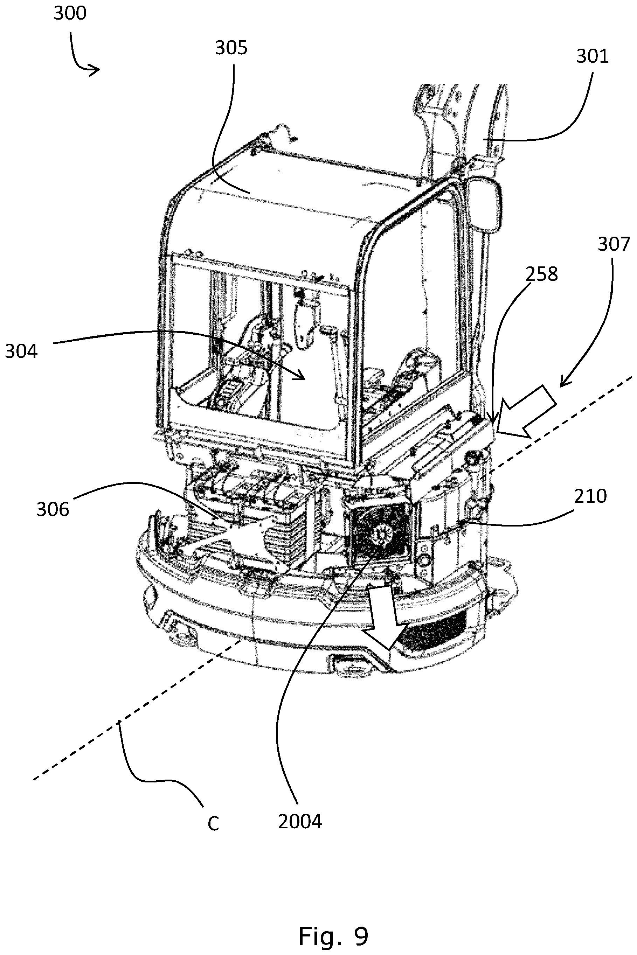

Referring now to Figures 9 to 11, a more detailed view of the layout of the working vehicle 300 is illustrated. The working vehicle 300 of Figures 9 to 11 includes the hydraulic pump system 210 of Figures 5 to 7.

The working vehicle 300 has an operator cabin 305 offset from a centreline C of the working vehicle 300 such that a centre of gravity of the operator cabin 305 is positioned on a first side of the centreline C (e.g. a left side of the centreline C as viewed in Figure 9). The hydraulic pump system 210 is mounted on the working vehicle 300 at a second side of the centreline C opposite to the first side (i.e. a right side of the centreline C as viewed in Figure 9). In this way, the hydraulic pump system 210 acts as a counterweight to the operator cabin 305.

In the illustrated configuration, the operator cabin 305 overlaps the centreline C. In other words, although the centre of gravity and/or geometric centre of the operator cabin 305 is to the first side of the centreline C, a portion of the operator cabin 305 is located on the second side of the centreline C.

The working vehicle 300 has one or more electric energy storage devices 306 (e.g. batteries). The one or more electric energy storage devices 306 are provided at a rear of the working vehicle 300 behind the operator cabin 305. The one or more electric energy storage devices 306 overlap the centreline C of the working vehicle 300.

The working vehicle 300 has a hydraulic fluid cooler 2004 (e.g. of the kind described above in relation to Figures 3 and 4). The hydraulic fluid cooler 2004 is, in this arrangement, located adjacent to the hydraulic pump system 210. In particular, the hydraulic fluid cooler 2004 is located at a rear of the working vehicle 300 behind the hydraulic pump system 210.

The working vehicle 300 has a cooling air flow path 307 which extends from a front inlet 258 at a front end of the working vehicle, through the hydraulic pump system 210, through the hydraulic fluid cooler 2004, and out a rear outlet 308 at a rear end of the working vehicle 300. In the illustrated configuration, the front inlet 258 is the inlet of the motor cover 256 described in relation to Figures 5 to 7 above. In other words, the passage from the inlet 258 to the outlet 260 of the motor cover 256 forms part of the cooling air flow path 307. After leaving the outlet 260 of the motor cover 256, the cooling air flow path 307 passes through the hydraulic fluid cooler 2004 before exiting through the rear outlet 308.

In the illustrated configuration the cooling air flow path 307 is configured such that air flows substantially parallel to the centreline C while travelling through the hydraulic pump system 210, and then turns towards a side of the working vehicle 300 after exiting the hydraulic pump system 210 (e.g. before, after or while travelling through the hydraulic fluid cooler 2004). The cooling air flow path 307 is configured so that air exits the rear outlet 308 at an angle in the range of 15 to 75 degrees, optionally 30 to 60 degrees, optionally substantially 45 degrees, to the centreline C.

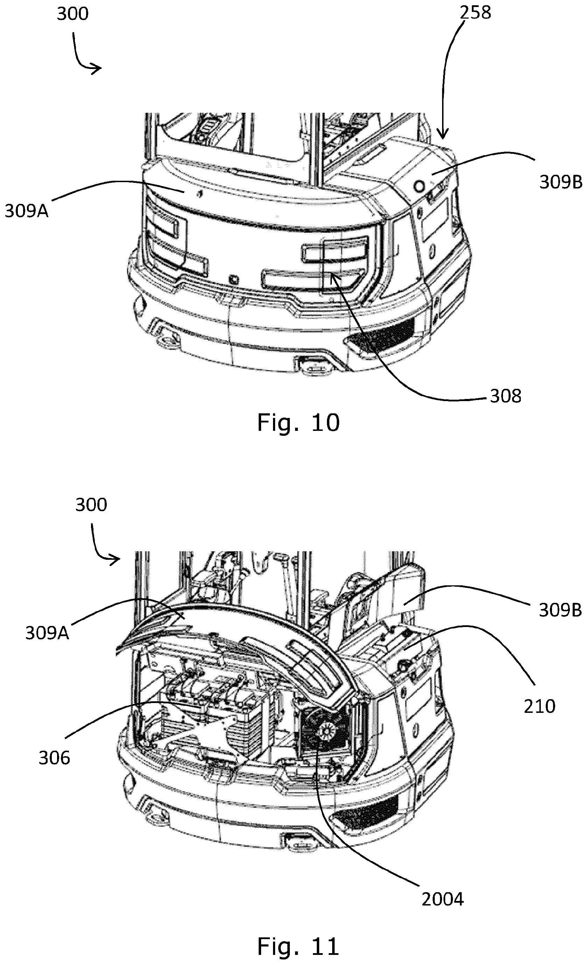

As best illustrated in Figures 10 and 11, the working vehicle 300 has a rear cover 309A for covering the one or more electric energy storage devices 306 and/or the hydraulic fluid cooler 2004. At least a portion of the rear cover 309A may be removably and/or pivotally attached to the working machine 300. For example, the rear cover 309A is shown pivoted upwards in Figure 11.

As is also best illustrated in Figures 10 and 11, the working vehicle 300 has a side cover 309B for covering the hydraulic pump system 210 and/or the hydraulic fluid cooler 2004. At least a portion of the side cover 309B may be removably and/or pivotally attached to the working machine. For example, a portion the side cover 309B is shown pivoted upwards in Figure 11.

Although the embodiments described above refer to hydraulic pump systems 10, 110, 210 and hydraulic systems 1000, 2000, it will be understood that the invention could be applied to other types of fluid systems. For example, the tank 14, 114, 214 may contain cooling oil/water or liquid fuel for an engine, and the pump systems 10, 110, 210 may be configured for pumping such cooling oil/water or liquid fuel to a corresponding cooling system or fuel system.

The one or more embodiments are described above by way of example only and it will be appreciated that the variations are possible without departing from the scope of protection afforded by the appended claims.

It should also be noted that whilst the appended claims set out particular combinations of features described above, the scope of the present disclosure is not limited to the particular combinations hereafter claimed, but instead extends to encompass any combination of features herein disclosed.

## Claims

1. A hydraulic system comprising a load-bearing hydraulic circuit comprising one or more hydraulic actuators, and a hydraulic pump system comprising:
a housing defining a tank for containing hydraulic fluid in use;
a pump for supplying hydraulic fluid from the tank to the one or more hydraulic actuators of the load-bearing hydraulic circuit;
an electric motor for driving the pump; and
a cooling jacket surrounding the electric motor, wherein the hydraulic pump system is configured such that the hydraulic fluid flows through the cooling jacket in order to transfer heat generated by the electric motor to the hydraulic fluid.

2. The hydraulic system of claim 1, wherein the electric motor is mounted on the housing.

3. The hydraulic system of claim 1 or 2, wherein the cooling jacket is part of the load-bearing hydraulic circuit.

4. The hydraulic system of claim 3, wherein the load-bearing hydraulic circuit comprises a hydraulic fluid cooler.

5. The hydraulic system of claim 4, wherein the hydraulic fluid cooler comprises an air-cooled cooler.

6. The hydraulic system of claim 4 or 5, wherein the hydraulic fluid cooler is located downstream of the one or more hydraulic actuators.

7. The hydraulic system of any of claims 4 to 6, wherein the load-bearing hydraulic circuit comprises a cooler manifold having an inlet, a first outlet coupled to an inlet of the hydraulic fluid cooler and a second outlet which bypasses the hydraulic fluid cooler, wherein the hydraulic system is configured to direct hydraulic fluid flowing through the inlet of the cooler manifold to the first or second outlet of the cooler manifold depending on a temperature of the hydraulic fluid.

8. The hydraulic system of claim 7, wherein the hydraulic system is configured to direct hydraulic fluid flowing through the inlet of the cooler manifold to the first outlet of the cooler manifold when a temperature of the hydraulic fluid is at or above a threshold fluid temperature, and to direct hydraulic fluid flowing through the inlet of the cooler manifold to the second outlet of the cooler manifold when the temperature of the hydraulic fluid is below the threshold fluid temperature.

9. The hydraulic system of any of claims 3 to 8, wherein the hydraulic system comprises a return manifold located downstream of the one or more hydraulic actuators, wherein the return manifold comprises one or more inlets, a first outlet coupled to the tank, and a second outlet coupled to an inlet of the cooling jacket.

10. The hydraulic system of claim 10 when dependent on claim 7, wherein the return manifold comprises a first inlet coupled to an outlet of the hydraulic fluid cooler and a second inlet coupled to the second outlet of the cooler manifold.

11. The hydraulic system of claim 9 or 10, wherein the hydraulic system is configured to direct hydraulic fluid flowing through the one or more inlets of the return manifold to the first or second outlet of the return manifold depending on a temperature of the electric motor and/or a temperature of the hydraulic fluid.

12. The hydraulic system of claim 11, wherein the hydraulic system is configured to direct hydraulic fluid flowing through the one or more inlets of the return manifold to the first outlet of the return manifold when a temperature of the electric motor is below a threshold motor temperature and/or when a temperature of the hydraulic fluid is at or above a threshold fluid temperature, and to direct hydraulic fluid flowing through the inlet of the return manifold to the second outlet of the return manifold when the temperature of the electric motor is at or above the threshold motor temperature and/or when the temperature of the hydraulic fluid is below the threshold fluid temperature.

13. The hydraulic system of any preceding claim, wherein the hydraulic pump system comprises a plurality of electric motors each driving a respective pump, and a plurality of cooling jackets each surrounding a respective electric motor.

14. The hydraulic system of claim 13 when dependent on claim 9, wherein the hydraulic system is configured to selectively and independently direct hydraulic fluid from the return manifold to the plurality of cooling jackets depending on temperatures of the respective electric motors.

15. A working vehicle comprising the hydraulic system of any preceding claim.
